# EUROPEAN PATENT SPECIFICATION

(11) **EP 0 846 516 B1**
(45) Date of publication and mention of the grant of the patent: **19.07.2000**
(21) Application number: 97120676.8
(22) Date of filing: 26.11.1997
(51) Int. Cl.: B23B 27/16

(54) **Toolholder for indexable inserts**
Werkzeughalter für Wendeschneidplatte
Porte-outil pour plaquette de coupe indexable

(30) Priority: 09.12.1996 SE 9604526
(43) Date of publication of application: 10.06.1998
(73) Proprietor: SANDVIK AKTIEBOLAG, 811 81 Sandviken (SE)
(72) Inventor: Tjernström, Eric, 802 67 Gävle (SE)
(74) Representative: Taquist, Lennart

(56) References cited:
- EP-A- 0 402 934
- WO-A-95/32829

## Description

The present invention relates to a toolholder for centrally apertured indexable inserts intended for chipforming machining of metallic workpieces.

Indexable inserts are usually provided with nose point angles below 60° and they are usually intended for copying machining. There exist a variety of toolholders for various types of indexable inserts with nose point angles of 55° such as rhombic, rhomboidic and triangular inserts with equal angles all around the insert. The material used for such inserts is normally cemented carbide material or ceramic material.

A commonly used locking system for such indexable inserts includes a pin in the holder extending upwardly into the insert-receiving pocket to engage a hole in the insert located in said pocket, and means for forcing said pin to be subjected to a pivoting movement inwardly towards said holder, said forcing means being arranged to actuate the lower portion of said pin, thus urging both the pin and the insert inwards towards a wall formed in the insert receiving pocket. Such type of toolholder is disclosed in US-Patent 3,314,126. The drawback of such holder, however, is that the forward nose portion of the cutting insert has a tendency of coming apart from the supporting shim plate located which can lead to insert failure.

In view thereof it is desirable to provide a toolholder with a press device which will ensure that the insert is pushed both downwardly and inwardly and clamp forces will keep the insert firmly and safely in place in its location without any tendency of coming apart from its underneath supporting surface.

This has become possible by using a clamp actuated by a clamping bolt, said clamp being provided with a forward and a rear protrusion one of which is arranged to engage with a portion of the hole wall of the insert and the other being arranged to abut against a contact surface in the holder which is inclined in relation to the central axis of the clamp-actuating screw. WO 95/32829 A discloses such a toolholder which corresponds to the preamble of appended claim 1.

It is an object of the present invention to provide a toolholder which will ensure that the insert is pushed inwardly upon tightening of the clamp.

In accordance with the invention this object is achieved by a toolholder as defined in claim 1.

The invention will now be described more in detail by reference to the enclosed drawings which illustrate a preferred embodiment of the invention.

Fig. 1 is a top view of a toolholder according to the invention.

Fig. 2 is a sectional view along the line II-II of the toolholder shown in Fig. 1.

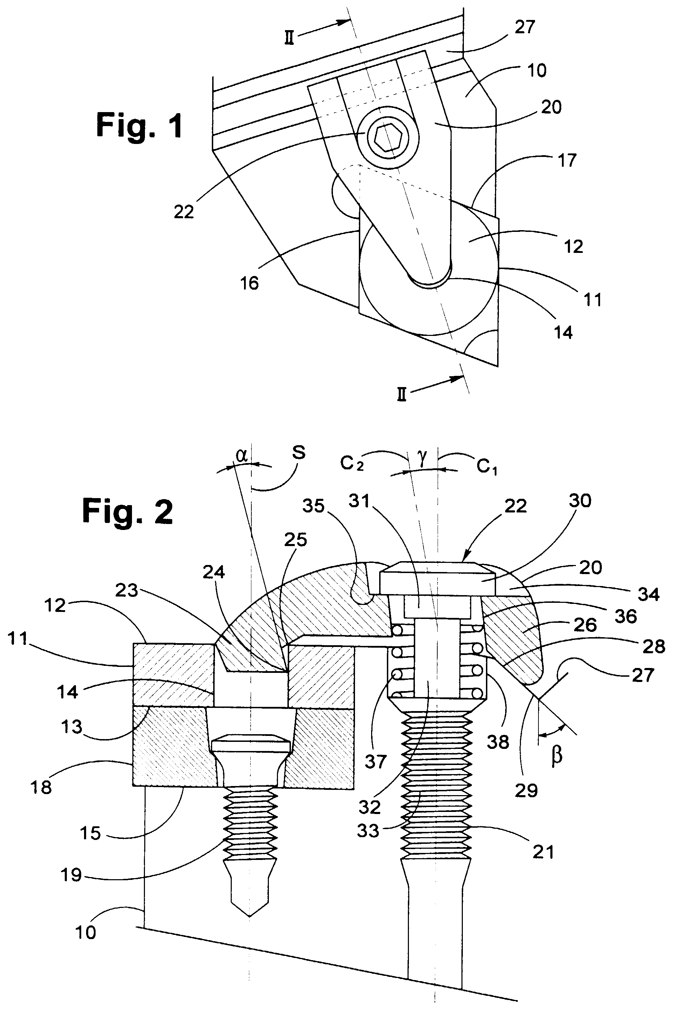

In Figs. 1-2 there is shown a cutting tool comprising a toolholder 10 the forward nose portion of which is provided with a pocket for the receipt of an indexable cutting insert 11. This insert has rhombic basic shape with nose point angles less than 60°. The insert has an upper flat surface 12 and a lower flat surface 13 parallel with said upper surface and perpendicularly extending side walls therebetween. The insert 11 has a central hole 14, the central axis of which is extending perpendicularly towards said upper and lower flat surfaces 12, 13. The insert receiving pocket comprises a bottom supporting surface 15 and two side support surfaces 16, 17 upstanding perpendicularly therefrom. The bottom supporting surface 15 could either be a partial surface portion of the holder 10 itself or be provided as a separate shim plate 18 in the insert-receiving pocket, said shimplate being secured to said holder by a screw 19 having a central axis S.

There is a clamp 20 provided for the clamping of the insert into its pocket in the holder 10, said clamp being actuatable by means o f a clamp screw 22 that extends entirely through said clamp and threadably engages a bore 21 in the holder 10, the central axis C₁ of said screw extending parallel with the central axis of the hole 14 in the insert. The forward end of said clamp is in the shape of a downwards-inwards inclined first protrusion 23 having an axis of symmetry inclined at an angle α in relation to said axis S, and intended to engage with the inwardly towards said holder directed hole wall of said hole 14 at a contact point 24 at a distance downwardly into the hole of the insert. At the same time an underneath surface of said clamp 20 abuts against the upper insert surface 12 at a contact surface 25 adjacent to the central hole 14 of the insert. The opposite end of said clamp is in the shape of a second protrusion 26 that is received in a recess 27 in the holder 10, the end surface 28 of said protrusion 26 being in the form of a flat surface for surface abutment with a corresponding planar contact surface 29 in said recess 27 that is inclined at an angle β in relation to the central axis C₁ of the clamp screw 22. Alternatively said end surface 28 could be convex for contact with the planar contact surface 29. The size of said angle (α) should be essentially of same size or somewhat smaller than the acute angle β at which the rear contact surface 29 of the holder is oriented.

The clamp screw 22 has an upper flange-formed head portion 30 integral with an adjacent cylindrical portion 31 with somewhat smaller diameter than said head portion which is integral with a cylindrically shaped waist portion 32 with a smaller diameter than said cylindrical portion 31. The waist portion 32 extends into a lower threaded portion 33 the diameter of which is larger than the diameter of the waist portion 32. Upon tightening, the top surface of the head 30 of the screw becomes essentially flush with the surrounding upper surface of said clamp 20 at the same time as said screw is received in a recess 34 in said clamp such that the underneath side of said screw head is located in abutment against a corresponding radially extending surface 35 in the clamp 20.

In accordance with the invention the toolholder is provided with a coil spring 37 around the upper portion of the clamp screw 22, so that the clamp is pressed upwards upon loosening the screw 20. The spring 37 extends axially along the cylindrical waist portion 32 and is partially received in an inclined bore 36 in the clamp 20 and is partially received in a cylindrical recess 38 in the toolholder. More specifically, the central axis C₂ of said bore 36 extends at an acute angle γ in relation to the central axis C₁ of said screw 22 and the common axis of the screw-receiving bore 21 in the toolholder. In accordance with a suitable embodiment the size of the angle γ is about the same as the selected size of the angle α, preferably in the range of 2-15°. As appears from Fig. 2 both the upper cylindrical portion 31 of the screw adjacent said screw head 30 as well as the upper portion of said coil spring 37 are received in said inclined bore 36, the arrangement being such that there is a certain play between said cylindrical portion 31 and the hole wall of said inclined bore 36 whereas the upper portion of said coil spring 37 is brought into surface contact with the hole wall of said bore 36 thus ensuring that the clamp 20 and the insert 11, upon tightening said screw 22, are being urged inwards towards the toolholder, thus establishing a firm and efficient clamping of said insert into its pocket in the toolholder 10. Further, thanks to the arrangement of locating the head of said screw 22 in a recess of said clamp it becomes possible to eliminate or reduce the risk of chips coming into intimate contact with the clamp body and avoids excessive wear thereof. The coil spring 37 is also partially received in a countersunk cylindrical recess 38 of the toolholder, the central axis of which coincides with axis C₁. The recess 38 extends into the threaded bore 21 in which the threaded portion 33 of the clamp screw 22 is received. The longitudinal extent of said recess 38 is substantially the same as the thickness of the insert 11. The rearmost located hole wall of the spring-receiving bore 36 in the clamp has a longer extent axially than compared with the diametrically opposite foremost hole wall of said bore 36. This ensures a more clear lateral guidance of said coil spring against the rear hole wall of said bore 36 so that a more efficient inwardly directed clamping of the insert is accomplished. Thanks to providing said inclined angle α the clamp is urged to move straight inwards towards the holder thereby urging the insert into its final position by arranging contact between the clamp 20 and the insert at the contact portion 24. The clamp thereby secures the insert 11 both vertically and horizontally. Thanks to providing a wedging action, as a result of the angle α, the horizontally acting force will be substantial.

Although the invention is described above in connection with a polygonally shaped indexable insert with a nose point angle below 60° it is to be understood that the invention could be similarly used for clamping inserts of other configurations, such as round inserts.

## Claims

1. A toolholder (10) with an insert pocket with an indexable insert (11) located therein, said insert having a center hole (14) and arranged to be secured by a clamp (20) with a rear protrusion (26) mounted on said toolholder for being actuated against said insert by means of a clamp screw (22) extending entirely through said clamp whilst threadably engaging said toolholder, said clamp having a forward protrusion (23) for engagement with the hole wall of said central hole (14) and said clamp screw also being surrounded by a coil spring (37) partially received in said clamp, the upper portion of said coil spring (37) being received in a bore (36) provided in the clamp (20) characterized in that the bore has a central axis (C₂) that is inclined at an acute angle (γ) in relation to the central axis (C₁) of said screw and the screw-receiving recess (21) of said toolholder (10), such that the coil spring (37), upon tightening of said clamp screw (22), urges said clamp (20) and said insert (11) inwards towards said toolholder (10).

2. Toolholder as defined in claim 1, **characterized** in that the central axis (C₁) of the clamp screw (22) is oriented parallel with the central axis (S) of the center hole (14) of the insert.

3. A toolholder as defined in claim 1, **characterized** in that the rear protrusion (26) of the clamp is received in a recess (27) of said toolholder, whereby an end surface (28) of said clamp (20) and a contact surface (29) of said toolholder (10) are oriented downwards-inwards towards the toolholder (10) at an acute angle (β) relative to the central axis (C₁) of the clamp screw (22) of said clamp.

4. Toolholder as defined in any of the claims 1-3, **characterized** in that the forward underneath portion of the clamp (20) that is located between the bore (36) of the clamp screw (22) and said forward protrusion (23) is arranged to come into abutment with the insert at a contact surface (25) adjacent said hole (14) of the insert at the same time as said forward protrusion (23) engages with the inwardly towards said holder directed hole wall of said insert center hole (14) at a contact point (24) in said hole (14) at a distance downwardly from the upper surface (12) of said insert.

5. Toolholder as defined in any of the claims 1-4, **characterized** in that the screw head (30), when tightened, has its underneath surface in contact with a radial shoulder (35) of said clamp whilst having its upper surface substantially flush with the upper surface of said clamp (20).

6. Toolholder as defined in any of the claims 1-5, **characterized** in that the coil spring (37) is partially received in a cylindrical recess (38) in the toolholder that is located adjacent a threaded bore (21) in said screw receiving recess of said toolholder, the central axis of said cylindrical recess (38) coinciding with the central axis (C₁) of the threaded bore (21) into which said clamp screw (22) is threadably engaged in the toolholder.

7. Toolholder according to claim 6, **characterized** in that the axial length of the cylindrical recess (38) is substantially the same as the thickness of the insert (11).

8. Toolholder as defined in any of the claims 1-7, **characterized** in that the rearmost located hole wall of the spring-receiving bore (36) in the clamp (20) has a longer extent axially than compared with the diametrically opposed foremost hole wall portion of said bore (36).

9. Toolholder as defined in any of the claims 3-8, **characterized** in that the forward protrusion (23) of the clamp is oriented downwards-inwards with an axis of symmetry that is inclined at an angle (α) relative to the central axis (S) of the insert center hole (14) that is substantially equal to or somewhat smaller than the size of the angle (β) under which the rear contact surface (29) of the toolholder is inclined.

10. Toolholder as defined in any of claims 1-8, **characterized** in that the forward protrusion (23) of the clamp (20) is oriented downwards-inwards with an axis of symmetry that is inclined at an angle (α) that is substantially equal to the acute angle (γ) under which the spring-receiving bore (36) in the clamp is inclined in relation to the axis (C₁) of the clamp screw (22).

11. Toolholder as defined in any of the claims 1-10, **characterized** in that the size of the angles (α) and (γ) amounts to 2-15°.

## Patentansprüche

1. Werkzeughalter (10) mit einer Einsatztasche mit einer Wendeschneidplatte (11), die darin angeordnet ist, wobei der Einsatz ein Mittelloch (14) hat und angeordnet ist, daß er durch eine Klemmvorrichtung (20) mit einem rückwärtigen Vorsprung (26) befestigt wird, der auf dem Werkzeughalter befestigt ist, um gegen den Einsatz mittels einer Klemmschraube (22) betätigt zu werden, die sich vollkommen durch die Klemmvorrichtung erstreckt, während sie mit dem Werkzeughalter in Gewindeeingriff kommt, wobei die Klemmvorrichtung einen vorderen Vorsprung (23) für den Eingriff mit der Lochwand des Mittelloches (14) hat und die Klemmschraube auch von einer Schraubenfeder (37) umgeben ist, die teilweise in der Klemmvorrichtung aufgenommen wird, wobei der obere Teil der Schraubenfeder (37) in einer Bohrung (36) aufgenommen wird, die in der Klemmvorrichtung (20) vorgesehen ist, **dadurch gekennzeichnet, daß** die Bohrung eine Mittelachse (C₂) hat, die unter einem spitzen Winkel (y) bezüglich der Mittelachse (C₁) der Schraube und der Schraubenaufnahmeausnehmung (21) des Werkzeughalters (10) derart geneigt ist, daß die Schraubenfeder (37) auf Festziehen der Klemmschraube (22) hin die Klemmvorrichtung (20) und den Einsatz (11) nach innen gegen den Werkzeughalter (10) drückt.

2. Werkzeughalter nach Anspruch 1, dadurch gekennzeichnet, daß die Mittelachse (C₁) der Klemmschraube (22) parallel zu der Mittelachse (S) des Mittelloches (14) des Einsatzes ausgerichtet ist.

3. Werkzeughalter nach Anspruch 1, dadurch gekennzeichnet, daß der rückwärtige Vorsprung (26) der Klemmvorrichtung in einer Ausnehmung (27) des Werkzeughalters aufgenommen ist, wodurch eine Endoberfläche (28) der Klemmvorrichtung (20) und eine Kontaktoberfläche (29) des Werkzeughalters (10) abwärts-einwärts gegen den Werkzeughalter (10) unter einem spitzen Winkel (β) bezüglich der Mittelachse (C₁) der Klemmschraube (22) der Klemmvorrichtung ausgerichtet sind.

4. Werkzeughalter nach einem der Ansprüche 1 bis 3, dadurch gekennzeichnet, daß der vordere, untere Teil der Klemmvorrichtung (20), welcher zwischen der Bohrung (36) der Klemmschraube (22) und dem vorderen Vorsprung (23) angeordnet ist, so angeordnet ist, daß er an einer Kontaktoberfläche (25) neben dem Loch (14) des Einsatzes mit dem Einsatz in Anschlag kommt, gleichzeitig wie der vordere Vorsprung (23) mit der nach innen gegen den Halter gerichteten Lochwand des Einsatzmittelloches (14) an einem Kontaktpunkt (24) in dem Loch (14) in einem Abstand nach unten von der oberen Oberfläche (12) des Einsatzes in Eingriff kommt.

5. Werkzeughalter nach einem der Ansprüche 1 bis 4, dadurch gekennzeichnet, daß sich, wenn der Schraubenkopf (30) festgezogen ist, seine untere Oberfläche in Kontakt mit einer radialen Schulter (35) der Klemmvorrichtung befindet, während seine obere Oberfläche im wesentlichen bündig mit der oberen Oberfläche der Klemmvorrichtung (20) ist.

6. Werkzeughalter nach einem der Ansprüche 1 bis 5, dadurch gekennzeichnet, daß die Schraubenfeder (37) teilweise in einer zylindrischen Ausnehmung (38) in dem Werkzeughalter aufgenommen ist, die neben einer Gewindebohrung (21) in der Schraubenaufnahmeausnehmung des Werkzeughalters angeordnet ist, wobei die Mittelachse der zylindrischen Ausnehmung (38) mit der Mittelachse (C₁) der Gewindebohrung (21) zusammenfällt, in welche die Klemmschraube (22) in dem Werkzeughalter in Gewindeeingriff kommt.

7. Werkzeughalter nach Anspruch 6, dadurch gekennzeichnet, daß die axiale Länge der zylindrischen Ausnehmung (38) im wesentlichen dieselbe ist wie die Dicke des Einsatzes (11).

8. Werkzeughalter nach einem der Ansprüche 1 bis 7, dadurch gekennzeichnet, daß die am weitesten hinten angeordnete Lochwand der Federaufnahmebohrung (36) in der Klemmvorrichtung (20) verglichen mit dem diametral entgegengesetzten vordersten Lochwandteil der Bohrung (36) axial eine längere Ausdehnung hat.

9. Werkzeughalter nach einem der Ansprüche 3 bis 8, dadurch gekennzeichnet, daß der vordere Vorsprung (23) der Klemmvorrichtung abwärts-einwärts mit einer Symmetrieachse ausgerichtet ist, die unter einem Winkel (α) bezüglich der Mittelachse (S) des Einsatzmittelloches (14) geneigt ist, der im wesentlichen gleich oder etwas kleiner als die Größe des Winkels (β) ist, unter welchem die rückwärtige Kontaktfläche (29) des Werkzeughalters geneigt ist.

10. Werkzeughalter nach einem der Ansprüche 1 bis 8, dadurch gekennzeichnet, daß der vordere Vorsprung (23) der Klemmvorrichtung (20) abwärts-einwärts mit einer Symmetrieachse ausgerichtet ist, die unter einem Winkel (α) geneigt ist, der im wesentlichen gleich dem spitzen Winkel (γ) ist, unter welchem die Federaufnahmebohrung (36) in der Klemmvorrichtung bezüglich der Achse (C₁) der Klemmschraube (22) geneigt ist.

11. Werkzeughalter nach einem der Ansprüche 1 bis 10, dadurch gekennzeichnet, daß die Größe der Winkel (α) und (γ) von 2 - 15° beträgt

## Revendications

1. Porte-outil (10) comportant une poche de plaquette de coupe, une plaquette de coupe amovible (11) étant située dans celle-ci, ladite plaquette de coupe comportant un trou central (14) et étant agencée pour être fixée par une fixation (20) avec une protubérance arrière (26) montée sur ledit porte-outil afin d'être actionnée contre ladite plaquette de coupe au moyen d'une vis de serrage (22) s'étendant entièrement au travers de ladite fixation tout en se mettant en prise par vissage avec ledit porte-outil, ladite fixation comportant une protubérance avant (23) en vue d'une prise avec la paroi de trou dudit trou central (14) et ladite vis de serrage étant également entourée par un ressort en spirale (37) reçu partiellement dans ladite fixation, la partie supérieure dudit ressort en spirale (37) étant reçue dans un alésage (36) ménagé dans la fixation (20), caractérisé en ce que l'alésage comporte un axe central (C₂) qui est incliné suivant un angle aigu (γ) par rapport à l'axe central (C₁) de ladite vis et l'évidement de réception de vis (21) dudit porte-outil (10), de sorte que le ressort en spirale (37), lors du serrage de ladite vis de serrage (22), sollicite ladite fixation (20) et ladite plaquette de coupe (11) vers l'intérieur en direction dudit porte-outil (10).

2. Porte-outil selon la revendication 1, caractérisé en ce que l'axe central (C₁) de la vis de serrage (22) est orienté parallèlement à l'axe central (S) du trou central (14) de la plaquette de coupe.

3. Porte-outil selon la revendication 1, caractérisé en ce que la protubérance arrière (26) de la fixation est reçue dans un évidement (27) dudit porte-outil, d'où il résulte qu'une surface d'extrémité (28) de ladite fixation (20) et une surface de contact (29) dudit porte-outil (10) sont orientées vers le bas et vers l'intérieur en direction du porte-outil (10) suivant un angle aigu (β) par rapport à l'axe central (C₁) de la vis de serrage (22) de ladite fixation.

4. Porte-outil selon l'une quelconque des revendications 1 à 3, caractérisé en ce que la partie de dessous avant de la fixation (20) qui est située entre l'alésage (36) de la vis de serrage (22) et ladite protubérance avant (23) est agencée pour venir jusqu'en butée avec la plaquette de coupe au niveau d'une surface de contact (25) adjacente audit trou (14) de la plaquette de coupe en même temps que ladite protubérance avant (23) se met en prise avec la paroi de trou orientée vers l'intérieur en direction dudit support dudit trou central (14) de la plaquette de coupe en un point de contact (24) dans ledit trou (14) à une certaine distance vers le bas par rapport à la surface supérieure (12) de ladite plaquette de coupe.

5. Porte-outil selon l'une quelconque des revendications 1 à 4, caractérisé en ce que la tête de vis (30), lorsqu'elle est serrée, présente sa surface de dessous en contact avec un épaulement radial (35) de ladite fixation tout en ayant sa surface supérieure pratiquement à fleur avec la surface supérieure de ladite fixation (20).

6. Porte-outil selon l'une quelconque des revendications 1 à 5, caractérisé en ce que le ressort en spirale (37) est partiellement reçu dans un évidement cylindrique (38) dans le porte-outil qui est situé à proximité d'un alésage fileté (21) dans ledit évidement de réception de vis dudit porte-outil, l'axe central dudit évidement cylindrique (38) coïncidant avec l'axe central (C₁) de l'alésage fileté (21) dans lequel ladite vis de serrage (22) est mise en prise par vissage dans le porte-outil.

7. Porte-outil selon la revendication 6, caractérisé en ce que la longueur axiale de l'évidement cylindrique (38) est pratiquement la même que l'épaisseur de la plaquette amovible (11).

8. Porte-outil selon l'une quelconque des revendications 1 à 7, caractérisé en ce que la paroi de trou située la plus à l'arrière de l'alésage de réception de ressort (36) dans la fixation (20) présente une étendue sur l'axe plus longue par comparaison à la partie de paroi de trou la plus à l'avant diamétralement opposée dudit alésage (36).

9. Porte-outil selon l'une quelconque des revendications 3 à 8, caractérisé en ce que la protubérance avant (23) de la fixation est orientée vers le bas et vers l'intérieur avec un axe de symétrie qui est incliné suivant un angle (α) par rapport à l'axe central (S) du trou central (14) de la plaquette de coupe qui est pratiquement égal ou légèrement plus petit que la valeur de l'ange (β) suivant lequel la surface de contact arrière (29) du porte-outil est inclinée.

10. Porte-outil selon l'une quelconque des revendications 1 à 8, caractérisé en ce que la protubérance avant (23) de la fixation (20) est orientée vers le bas et vers l'intérieur avec un axe de symétrie qui est incliné suivant un angle (α) qui est pratiquement égal à l'angle aigu (γ) suivant lequel l'alésage de réception de ressort (36) dans la fixation est incliné par rapport à l'axe (C₁) de la vis de serrage (22).

11. Porte-outil selon l'une quelconque des revendications 1 à 10, caractérisé en ce que les valeurs des angles (α) et (γ) sont de 2 à 15°.
